# EUROPÄISCHE PATENTANMELDUNG

(11) **EP 4 002 124 A1**
(43) Veröffentlichungstag der Anmeldung: **25.05.2022**
(21) Anmeldenummer: 20209192.2
(22) Anmeldetag: 23.11.2020
(51) Int. Cl.: G06F 11/263

(54) **VERFAHREN UND SYSTEME ZUM VALIDIEREN VON INDUSTRIELLEN MASCHINENSYSTEMEN**

(71) Anmelder: Siemens Aktiengesellschaft, 80333 München (DE)
(72) Erfinder: Bungert, Ulrich, 92348 Berg (DE); Gohla, Jürgen, 91369 Wiesenthau (DE); Rupp, Dieter, 91460 Baudenbach (DE)

(57) **Zusammenfassung**

Die Erfindung betrifft ein Verfahren, bei welchem eine industrielle Maschine oder eine Automatisierungsanlage mittels eines computergestützten Sicherheitstests (1000) überprüft wird, wobei bei dem computergestützten Sicherheitstest (1000) wenigstens ein Ansteuerungspfad der gesamten industriellen Maschine oder der gesamten Automatisierungsanlage überprüft wird.

## Beschreibung

Die Erfindung betrifft ein Verfahren, bei welchem eine industrielle Maschine oder eine Automatisierungsanlage mittels eines computergestützten Sicherheitstests überprüft bzw. validiert wird.

Darüber hinaus betrifft die Erfindung ein Computerprogramm umfassend Befehle, welche beim Ausführen des Computerprogramms durch eine Engineering-Plattform, diese dazu veranlassen, das vorgenannte Verfahren durchzuführen.

Obendrein betrifft die Erfindung einen maschinenlesbaren Datenträger und einen Datenstrom mit dem vorgenannten Computerprogramm. Dabei kann das Computerprogramm beispielsweise in verschlüsselter und/oder komprimierter Form vorliegen.

Außerdem betrifft die Erfindung eine Engineering-Plattform, umfassend das vorgenannte Computerprogramm.

Die Verfahren der eingangs genannten Art sind aus dem Stand der Technik bekannt. Beispielsweise zeigt US 2004/0153788 A1 ein Verfahren, bei welchem einzelne Komponenten einer industriellen Maschine überprüft werden können. Der computergestützte Sicherheitstest ist dabei als ein Wizard ausgestaltet, welcher auf einer Engineering-Plattform abläuft. Nachteilhaft bei den aus dem Stand der Technik bekannten Verfahren ist, dass im Rahmen der Maschinenvalidierung mithilfe solcher Sicherheitstests nur bestimmte einzelne Komponenten, beispielsweise Antriebe, der Maschine validiert werden können.

Die Aufgabe der vorliegenden Erfindung kann somit darin gesehen werden, Verfahren und Systeme, insbesondere in Form von Engineering-Plattformen bereitzustellen, die den vorgenannten Nachteil überwinden.

Die Aufgabe der Erfindung wird mit einem eingangs genannten Verfahren erfindungsgemäß dadurch gelöst, dass bei dem computergestützten Sicherheitstest wenigstens ein Ansteuerungspfad der gesamten industriellen Maschine oder der gesamten Automatisierungsanlage überprüft wird.

Die Erfindung ermöglicht beispielsweise einen Funktionstest der Sicherheitsfunktionen der industriellen Maschine oder der Automatisierungsanlage.

Bei einer Ausführungsform kann vorgesehen sein, dass der computergestützte Sicherheitstest aus über die industrielle Maschine oder über die Automatisierungsanlage verfügbaren Daten den wenigstens einen Ansteuerungspfad, vorzugsweise automatisch, ermittelt und aus diesen Daten eine Testspezifikation bzw. eine Beschreibung eines Testfalls für den ermittelten wenigstens einen Ansteuerungspfad generiert. Gemäß dieser Spezifikation kann der Sicherheitstest durchgeführt werden.

Darüber hinaus kann vorgesehen sein, dass mehrere Ansteuerungspfade ermittelt werden und für jeden Ansteuerungspfad eine Testspezifikation bzw. eine Beschreibung eines Testfalls generiert wird.

Die verfügbaren Daten, die für die Beschreibung des Testfalls oder der Testfälle relevant sind, können beispielsweise aus Maschinensignalen und/oder -zuständen, die in den Steuerungs-und Antriebssystemen verfügbar sind, ausgelesen und vorzugsweise visualisiert werden
Bei einer Ausführungsform kann mit Vorteil vorgesehen sein, dass der computergestützte Sicherheitstest die Überprüfung des wenigstens einen Ansteuerungspfades automatisch durchführt.

Bei einer Ausführungsform kann es zweckmäßig sein, wenn der wenigstens eine Ansteuerungspfad mit einer Sensoreinrichtung beginnt und mit einer Reaktionskomponente endet und bei dem Überprüfen des wenigstens einen Ansteuerungspfades einzelne physikalische und/oder datentechnische Schnittstellen geprüft werden. Dies hat zum Vorteil, dass bei dem Sicherheitstest Schnittstellen der Automatisierungs- und Antriebskomponenten in der Maschine / Anlage mit in die Validierung einbezogen und validiert werden können.

Bei einer Ausführungsform kann zweckdienlich sein, wenn bei dem computergestützten Sicherheitstest
- für die Überprüfung des wenigstens einen Ansteuerungspfades ein entsprechender Initialzustand der industriellen Maschine oder der Automatisierungsanlage definiert und ein entsprechender Testablauf festgelegt wird,
- die industrielle Maschine oder die Automatisierungsanlage in den Initialzustand versetzt bzw. überführt wird und währenddessen überwacht wird,
- beginnend von dem Initialzustand der Testablauf durchgeführt wird, wobei die industrielle Maschine oder die Automatisierungsanlage bei dem Testablauf überwacht wird.

Der Testablauf kann einen oder mehrere Testschritte umfassen, in welchen Handlungsanweisungen und zu erwartende Reaktionen der industriellen Maschine oder der Automatisierungsanlage beschrieben sind.

Das vorhin beschriebene Verfahren gestattet die Übertragung der Testfall-Beschreibungen (Initialzustand, Testablauf) auf andere industrielle Maschinen / Automatisierungsanlagen zur Wiederverwendbarkeit.

Bei einer Ausführungsform kann vorgesehen sein, dass bei dem Überwachen geprüft wird, ob eine oder mehrere Reaktionen der industriellen Maschine oder der Automatisierungsanlage auf Handlungsschritt(e) mit einer/mehreren zu erwartenden Reaktion/en übereinstimmen.

Unter dem Begriff "zu erwartende Reaktion auf einen Handlungsschritt" wird im Zusammenhang mit der vorliegenden Erfindung ein durch das Vornehmen des Handlungsschritts hervorgerufenes Verhalten der industriellen Maschine oder der Automatisierungsanlage verstanden, das die industrielle Maschine oder die Automatisierungsanlage zeigen muss, damit ein dem Handlungsschritt entsprechender Teiltest als erfolgreich abgeschlossen gelten kann.

In anderen Worten können zur Durchführung eines Tests mehrere Teiltests notwendig sein, wobei jeder Teiltest durch einen Handlungsschritt vorgenommen wird. Jeder der Handlungsschritte führt zu einem Teil-Ergebnis, welches als Ergebnis des Teiltests angesehen werden kann.

Dabei kann es mit Vorteil vorgesehen sein, dass während des gesamten Testablaufs für den Testablauf relevante Daten, Zustände der industriellen Maschine oder der Automatisierungsanlage, durchgeführte Handlungsschritte und Reaktionen der industriellen Maschine oder der Automatisierungsanlage auf die durchgeführten Handlungsschritte überwacht und vorzugsweise dokumentiert werden.

Es kann besonders nützlich sein, wenn vorgeschriebene Handlungsschritte, die tatsächlich nicht vorgenommen wurden, und/oder nicht erreichte Zustände der Fertigungsanlage in dem Computerprogramm ausgewiesen und dokumentiert werden.

Bei einer Ausführungsform kann vorgesehen sein, dass der computergestützte Sicherheitstest ferner einen Abnahmetest, bei welchem zumindest eine Sicherheitsfunktion überprüft wird, umfasst.

Bei einer Ausführungsform kann es vorteilhaft sein, wenn die industrielle Maschine oder die Automatisierungsanlage in Form einer Simulation, eines digitalen Abbildes einer realen industriellen Maschine oder der Automatisierungsanlage, insbesondere in Form eines digitalen Zwillings vorliegt.

Bei einer Ausführungsform kann vorgesehen sein, dass der computergestützte Sicherheitstest durch einen Bediener oder automatisch durchgeführt wird.

Die oben genannte Aufgabe wird auch mit einem Computerprogramm erfindungsgemäß dadurch gelöst, dass das Programm Befehle umfasst, welche beim Ausführen des Computerprogramms durch einen an der industriellen Maschine oder an der Automatisierungsanlage angeschlossenen Computer, diesen dazu befähigen oder veranlassen, das vorgenannte Verfahren durchzuführen. Das Computerprogramm kann beispielsweise auf einem Laptop oder Tablet gespeichert sein.

Das Verfahren kann auf den unterschiedlichen Plattformen (Engineering-Plattformen, HMI) implementiert werden.

Zusammenfassend bietet das vorhin beschriebene Verfahren eine generische Beschreibung von Testfällen. Ein Testfall kann Eingangsbedingungen, Handlungsanweisungen und Reaktionen umfassen. Die Durchführung dieser (unterschiedlichen) Testfälle (mit unterschiedlichen Testabläufen) kann an der Maschine oder an der Automatisierungsanlage manuell durch einen Anwender oder durch einen software-basierten automatischen Ablauf erfolgen.

Die für die Beschreibung der Testfälle relevanten Daten können aus Maschinensignalen und/oder -zuständen, die in den Steuerungs- und Antriebssystemen verfügbar sind, ausgelesen und beispielsweise visualisiert werden. Die Reaktion der industriellen Maschine oder der Automatisierungsanlage definiert das konkrete und detaillierte Verhalten, das die industrielle Maschine oder die Automatisierungsanlage beim Testablauf einnehmen muss, damit der Test erfolgreich abgeschlossen werden kann.

Die Durchführung der Sicherheitstests mit einem Computerprogramm bietet dem Anwender eine einfache Durchführung der Testfälle auf der Basis von Assistenten. Die Assistenten können beispielsweise automatisch aus der Testfall-Beschreibung generiert werden und im Rahmen der Testdurchführung auf die Daten und Zustände der industriellen Maschine oder der Automatisierungsanlage (verfügbar in den Steuerungs- und Antriebssystemen) zugreifen. Neben dieser manuellen Durchführung gestattet das Verfahren, wie bereits beschrieben, auch die Automatisierung der Testfälle, die damit selbstständig beispielsweise auf einer Steuerung ablaufen können.

Das Verfahren ermöglicht einerseits eine höhere Transparenz bei der Validierung der industriellen Maschinen oder der Automatisierungsanlagen, insbesondere bei der Validierung ihrer Verdrahtung. Andererseits kann das Verfahren die Zeit und den Aufwand, die ein Maschinenbauer für Prozesserstellung für die Tests sowie für eine manuelle Beschreibung, Durchführung und Dokumentation der Testschritte aufwendet, deutlich reduzieren.

Im Folgenden wird die Erfindung anhand der in den Figuren dargestellten Ausführungsbeispiele näher beschrieben und erläutert. Es zeigen:
- FIG 1: ein System zum Überprüfen der Sicherheit einer Fertigungsanlage, und
- FIG 2: ein Flussdiagramm eines Ausführungsbeispiels eines Validierungsverfahrens einer Fertigungsanlage.

In den Ausführungsbeispielen und Figuren können gleiche oder gleich wirkende Elemente jeweils mit den gleichen Bezugszeichen versehen sein. Außerdem dienen die Bezugszeichen in den Ansprüchen und in der Beschreibung lediglich zu einem besseren Verständnis der vorliegenden Anmeldung und sollen auf gar keinen Fall als eine Beschränkung des Gegenstands der vorliegenden Erfindung angesehen werden.

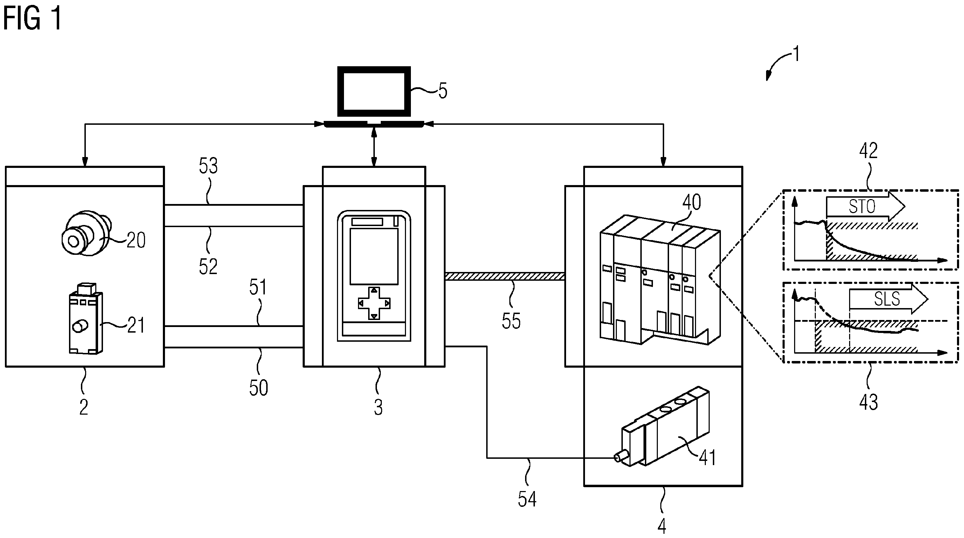

Zunächst wird auf FIG 1 Bezug genommen. Diese zeigt ein System 1 zum Überprüfen der Sicherheit einer Fertigungsanlage. Systeme zum Überprüfen der Sicherheit von industriellen Maschinen, beispielsweise Werkzeugmaschinen, oder Automatisierungsanlagen, beispielsweise Fertigungsanlagen, weisen eine Funktionalität auf, die typischerweise drei Funktionen umfasst: Erfassen, Auswerten und Reagieren. Jede Funktion kann beispielsweise mittels einer Hardware- oder Softwarekomponente durchführbar sein, wobei die Hardware- und/oder Softwarekomponenten miteinander zusammenwirken, um die Funktionalität des Sicherheitssystems zu ermöglichen. Die drei Komponenten können baulich getrennt voneinander ausgebildet sein und/oder Benutzerschnittstellen aufweisen.

Das System 1 kann als eine Engineering-Plattform oder als ein Teil einer Engineering-Plattform ausgebildet sein. Ein Beispiel einer Engineering-Plattform ist TIA (engl.: Totally Integrated Automation) Portal.

Das Zusammenwirken der einzelnen Komponenten wird durch Verbinden der Komponenten zum einseitigen oder zweiseitigen Information- und/oder Signalaustausch ermöglicht. Die Komponenten können beispielsweise kabelgebunden sein. Die Verbindung der Komponenten kann auch über Funk erfolgen.

Das in FIG 1 gezeigte System 1 umfasst eine Sensoreinrichtung 2 (Erfassen), eine Steuereinheit 3 (Auswerten) und eine Reaktionskomponente 4 (Reagieren).

Die Sensoreinrichtung 2 weist einen Not-Aus-Schalter bzw. Not-Halt-Schalter 20 einer (hier nicht gezeigten) Werkzeugmaschine und einen Sicherheitspositionsschalter 21, der an einem (hier nicht gezeigten) Fertigungsband angeordnet sein kann. Die Sensoreinrichtung 2 kann auch einen oder mehrere Sensoren anderer Art umfassen. Die einzelnen Sensoren können als technische Fühler bzw. Messfühler oder als Sensorschalter, beispielsweise wie der vorgenannte auf Berührungen regierende Schalter 20 ausgebildet sein.

Die Sensoreinrichtung 2 ist mit der Steuereinheit 3 mittels Verbindungen 50, 51, 52, 53 verbunden. Die Datenverbindungen können beispielsweise als Kabel (in diesem Fall wird von einer Verdrahtung zwischen der Sensoreinrichtung 2 und der Steuereinheit 3 gesprochen) oder als ein Datenbussystem (z.B. ein Feldbus). Die Steuereinheit 3 wertet von der Sensoreinrichtung 2, beispielsweise von dem Notausschalter bzw. Not-Halt-Schalter 20 oder von dem Sicherheitspositionsschalter 21 empfangenen Signale aus und sendet entsprechende Signale / Befehle, beispielsweise über weitere Verbindungen an die Reaktionskomponente 4, um die Werkzeugmaschine und oder das Fertigungsband über die Reaktionskomponente 4 anzusteuern. Die weiteren Verbindungen können ebenfalls als Kabel 54 (digitale Ausgänge der Steuereinheit 3) oder als ein Feldbus 55 ausgebildet sein.

Die Steuereinheit 3 kann die Ergebnisse der Auswertung an die Reaktionskomponente, beispielsweise in Form von zyklischen Telegrammen übermitteln. Beispielsweise kann die Auswertekomponente mit einem, vorzugsweise fehlerfrei funktionierenden Auswerte-Computerprogramm zum Auswerten der von der Erfassungskomponente empfangenen Signalen ausgestattet sein und vorzugsweise eine mit einer Bedienoberfläche ausgestattete Benutzerschnittstelle aufweisen.

Die Reaktionskomponente 4 umfasst eine als Umrichter 40 ausgebildete Antriebseinheit und einen Aktor 41, der beispielsweise als ein Wegeventil ausgebildet sein kann. Der Aktor 41 kann beispielsweise dazu eingerichtet sein, eine oder mehrere Maschinenkomponenten der (hier nicht gezeigten) Werkzeugmaschine beispielsweise hydraulisch oder pneumatisch anzutreiben. Der Umrichter 40 kann beispielsweise als ein Frequenzumrichter ausgebildet sein. Der Umrichter 40 kann zum Antrieb der Teile oder der gesamten Werkzeugmaschine, des Fertigungsbandes oder eines anderen Teils bzw. einer anderen Komponente der Fertigungsanlage vorgesehen sein.

Insgesamt lässt FIG 1 mehrere Ansteuerpfade erkennen, über welche die sicherheitsrelevanten Signale von der Sensoreinrichtung 2 zu der Reaktionskomponente 4 übertragen werden können. Z.B. bilden die Verbindungen 52 und 53 einen Teil eines logischen, vorzugsweise fehlersicheren Ansteuerpfades. Die Verbindungen 50, 51 bilden ebenfalls einen Teil eines logischen, vorzugsweise fehlersicheren Ansteuerpfades. Jeder Ansteuerpfad beginnt in einem Sensor 20, 21 der Sensoreinrichtung 2 und endet in einem Umrichter 40 oder einem Aktor 41. Somit handelt es sich um Ansteuerpfade der gesamten Fertigungsanlage.

Der Umrichter 40 kann beispielsweise als eine Versorgungseinheit für einen Antrieb (hier nicht gezeigt), beispielsweise einen Vorschub- oder einen Hauptantrieb einer Werkzeugmaschine ausgebildet sein.

Der Aktor 41 kann beispielsweise als ein Pneumatik- bzw. Hydraulikaktor, Hilfsantrieb usw. ausgebildet sein.

Bevor die Fertigungsanlage in Betrieb genommen werden kann, wird das System 1 mittels eines computergestützten Sicherheitstests geprüft, wobei bei dem Sicherheitstest wenigstens einer der vorgenannten Ansteuerungspfade überprüft wird. Bei dem computergestützten Sicherheitstest handelt es sich um einen Sicherheitstest, der mithilfe eines Computerprogramms durchgeführt wird.

Bei dem Überprüfen des Ansteuerungspfades oder der Ansteuerungspfade können einzelne physikalischen und/oder datentechnischen Schnittstellen, zum Beispiel einzelne Verbindungen 50 bis 55 geprüft werden.

Durch eine solche Prüfung einzelner Datenpunkte kann der gesamte Signalpfad vom Sensor 20, 21 bis zum Umrichter 40 oder Aktor 41 aufgespannt und damit in den Test mit einbezogen werden. Somit erfolgt ein Test der gesamten Fertigungsanlage - ein Verdrahtungstest.

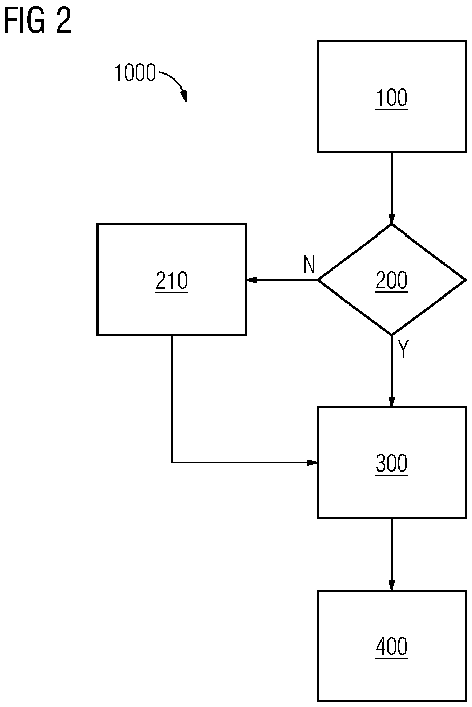

FIG 2 zeigt ein Flussdiagramm eines Ausführungsbeispiels des computergestützten Sicherheitstests 1000, bei welchem wenigstens ein Ansteuerungspfad überprüft wird. Dazu kann der computergestützte Sicherheitstest 1000 aus über die industrielle Maschine oder über die Automatisierungsanlage verfügbaren Daten den Ansteuerungspfad, vorzugsweise automatisch, ermitteln und eine Testspezifikation für den ermittelten wenigstens einen Ansteuerungspfad generieren. Die Überprüfung des Ansteuerungspfades kann der computergestützte Sicherheitstest 1000 automatisch und vorzugsweise basierend auf den Testspezifikationen durchführen.

Zunächst - Schritt 100 - können für die Überprüfung des wenigstens einen Ansteuerungspfades ein Initialzustand der (gesamten) Fertigungsanlage und ein Testablauf festgelegt werden. In anderen Worten kann es zweckdienlich sein, einen bestimmten Ansteuerungspfad ausgehend von einem bestimmten entsprechenden Initialzustand und gemäß einem bestimmten Testablauf zu überprüfen.

Dies kann beispielsweise durch einen Bediener erfolgen, der in dem Computerprogramm einen Initialzustand definiert und einen Testablauf für die Überprüfung eines bestimmten Ansteuerungspfades festlegt.

Anschließend - Schritt 200 - wird die Fertigungsanlage in den Initialzustand versetzt. Der Initialzustand kann beispielsweise vorschreiben, dass der Aktor 41 (z.B. eine Achse) in eine definierte Position gefahren werden soll. Das Versetzen der Fertigungsanlage in den vordefinierten Zustand wird bei dem computergestützten Sicherheitstest überwacht. Dabei wird dafür gesorgt, dass diese Aktion - das Versetzen - richtig bzw. ordnungsgemäß durchgeführt wird, indem beispielsweise überprüft wird, ob die Fertigungsanlage auf beim Versetzen in den Initialzustand durchzuführende Handlungen ordnungsgemäß reagiert, d. h die Reaktion der Fertigungsanlage auf die Handlungen der zu erwartenden Reaktion entspricht. Treten bei dem Versetzen der Fertigungsanlage in den Initialzustand keine Fehler auf, wird der (weitere) Testablauf freigegeben - Pfeil Y.

Entspricht beim Versetzen der Fertigungsanlage in den Initialzustand ihre Reaktion nicht der zu erwartenden Reaktion - Pfeil N (der Aktor 41 bleibt zum Beispiel still oder wird nicht in die definierte Position gefahren), kann das Computerprogramm eine Warnmeldung ausgeben und den Bediener zu dem Beheben des aufgetretenen Fehlers bzw. der aufgetretenen Fehler auffordern - Schritt 210. Nachdem der oder die Fehler behoben wurde oder wurden und der definierte Initialzustand erreicht wurde, wird der weitere Testablauf freigegeben. Es ist auch denkbar, dass das Computerprogramm den Fehler automatisch / von sich aus behebt und dies vorzugsweise dokumentiert. Das letztere kann insbesondere dann der Fall sein, wenn die Fertigungsanlage als ein digitaler Zwilling ausgebildet ist, d.h. ein digitales Abbild einer realen Fertigungsanlage ist.

Nachdem der (definierte) Initialzustand - entweder ohne Fehler oder nachdem alle Fehler behoben sind - erreicht ist, wird der weitere Ablauf des Tests freigegeben.

Der Testablauf kann eine Beschreibung von durchzuführenden Handlungen und zu erwartenden Reaktionen der Fertigungsanlage umfassen. In anderen Worten kann ein Bediener beim computergestützten Sicherheitstest von dem Computerprogramm durch den Test geführt werden, indem er/sie Handlungsanweisungen erhält.

Dabei können während des gesamten Ablaufs für den Testablauf relevante Daten, Zustände der Fertigungsanlage, beispielsweise vom Bediener vorgenommene Handlungsschritte und Reaktionen der Fertigungsanlage auf die vorgenommenen Handlungsschritte überwacht und vorzugsweise dokumentiert werden. Es kann besonders nützlich sein, wenn vorgeschriebene Handlungsschritte, die tatsächlich nicht vorgenommen wurden, und/oder nicht erreichte Zustände der Fertigungsanlage in dem Computerprogramm ausgewiesen und dokumentiert werden.

Bei jeder durchgeführten Handlung kann beispielsweise die Reaktion der Fertigungsanlage auf diese Handlung mit einer zu erwartenden Reaktion verglichen werden.

Bei dem weiteren Testablauf kann beispielsweise überprüft werden, ob der Umrichter 40 in Reaktion auf ein vom Sensor 20, 21 ausgehendes Signal eine oder mehrere Sicherheits-Teilfunktionen 42, 43 durchführt, ohne dass diese Sicherheits-Teilfunktionen 42, 43 selbst überprüft werden müssen.

Jede Antriebseinheit umfasst zumindest eine Sicherheitsfunktion. Diese zumindest eine Sicherheitsfunktion ist in jeder Antriebseinheit integriert. Der Begriff "Sicherheitsfunktion" ist auf dem Gebiet der funktionalen Sicherheit hinlänglich bekannt. Eine Sicherheitsfunktion umfasst (alle) Sicherheits-Teilfunktionen von Sensor bis zum Aktor oder bis zum Antrieb/Umrichter.

Eine nicht abschließende Liste der Sicherheitsfunktionen ist: STO (Safe torque off); SS1 (Safe stop 1); SS2 (Safe stop 2); SOS (Safe operating stop); SLS (Safelylimited speed); SSM (Safe speed monitor); SSR (Safe speed range); SLP (Safelylimited position); SDI (Safe direction). Die vorgenannten Sicherheits-Teilfunktionen sind beispielsweise in DIN EN 61800-5-2 enthalten. Weitere Sicherheits-Teilfunktionen sind beispielsweise SP (Safe position); SBC/SBT (Safe brake control, Safe brake test).

Ferner kann der Sicherheitstest einen Abnahmetest umfassen, bei welchem auch die Richtigkeit der Ausführung zumindest eine der Sicherheits-Teilfunktionen 42, 43 überprüft wird - Schritt 400.

Abnahmetest ist auch als Konfigurationstest (IEC 61800-5-2) oder Safety-Abnahmetest bekannt. Bei einem Abnahmetest kann ein oder mehrere der nachfolgenden Schritte durchgeführt werden:
- Überprüfen einer oder mehreren Sicherheitsfunktionen auf korrekte Parametrisierung;
- Durchführen einer Plausibilitätskontrolle der (projektierten) Sicherheitsfunktionen durch Messung von Reaktionszeiten und/oder Beobachten der Stopp-Reaktionen bei Grenzwertverletzungen;
- Dokumentieren der parametrierten Sicherheitsfunktionen.

Das vorgenannte Computerprogramm kann beispielsweise auf einem computerlesbaren Datenträger ausführbar gespeichert sein. Der Datenträger kann beispielsweise als eine Festplatte eines Laptops 5, also eines tragbaren Computers sein. Der Laptop 5 kann beispielsweise an der vorgenannten Engineering-Plattform angebunden oder ein Teil davon sein.

Der Laptop 5 mit dem darauf installierten Computerprogramm kann zwecks Durchführung des Sicherheitstests an das System 1 einer realen Fertigungsanlage angeschlossen sein oder mit ihrem digitalen Abbild verbunden sein.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale (FIG 2) auch bei dem System (FIG 1) zum Einsatz kommen bzw. dieses vervollständigen und *vice versa.*

## Patentansprüche

1. Verfahren, bei welchem eine industrielle Maschine oder eine Automatisierungsanlage mittels eines computergestützten Sicherheitstests (1000) überprüft wird, wobei bei dem computergestützten Sicherheitstest (1000) wenigstens ein Ansteuerungspfad der gesamten industriellen Maschine oder der gesamten Automatisierungsanlage überprüft wird.

2. Verfahren nach Anspruch 1, wobei der computergestützte Sicherheitstest (1000) aus über die industrielle Maschine oder über die Automatisierungsanlage verfügbaren Daten den wenigstens einen Ansteuerungspfad, vorzugsweise automatisch, ermittelt und eine Testspezifikation für den ermittelten wenigstens einen Ansteuerungspfad generiert.

3. Verfahren nach Anspruch 1 oder 2, wobei der computergestützte Sicherheitstest (1000) die Überprüfung des wenigstens einen Ansteuerungspfades automatisch durchführt.

4. Verfahren nach einem der Ansprüche 1 bis 3, wobei der wenigstens eine Ansteuerungspfad der gesamten industriellen Maschine oder der gesamten Automatisierungsanlage mit einer Sensoreinrichtung (2,20,21) beginnt und mit einer Reaktionskomponente (4,40,41) endet und bei dem Überprüfen des wenigstens einen Ansteuerungspfades einzelne physikalische und/oder datentechnische Schnittstellen geprüft werden.

5. Verfahren nach einem der Ansprüche 1 bis 4, wobei bei dem computergestützten Sicherheitstest
- für die Überprüfung des wenigstens einen Ansteuerungspfades ein entsprechender Initialzustand der industriellen Maschine oder der Automatisierungsanlage definiert und ein entsprechender Testablauf festgelegt wird,
- die industrielle Maschine oder die Automatisierungsanlage in den Initialzustand versetzt wird und währenddessen überwacht wird,
- beginnend von dem Initialzustand der Testablauf durchgeführt wird, wobei die industrielle Maschine oder die Automatisierungsanlage bei dem Testablauf überwacht wird.

6. Verfahren nach Anspruch 5, wobei während des gesamten Testablaufs für den Testablauf relevante Daten, Zustände der industriellen Maschine oder der Automatisierungsanlage, durchgeführte Handlungsschritte und Reaktionen der industriellen Maschine oder der Automatisierungsanlage auf die durchgeführten Handlungsschritte überwacht und vorzugsweise dokumentiert werden.

7. Verfahren nach einem der Ansprüche 1 bis 6, wobei der computergestützte Sicherheitstest einen Abnahmetest, bei welchem zumindest eine Sicherheitsfunktion und/oder eine Sicherheits-Teilfunktion (42,43) überprüft wird, umfasst.

8. Verfahren nach einem der Ansprüche 1 bis 7, wobei die industrielle Maschine oder die Automatisierungsanlage in Form einer Simulation, eines digitalen Abbildes einer realen industriellen Maschine oder der Automatisierungsanlage, insbesondere in Form eines digitalen Zwillings vorliegt.

9. Verfahren nach einem der Ansprüche 1 bis 8, wobei der computergestützte Sicherheitstest durch einen Bediener oder automatisch durchgeführt wird.

10. Computerprogramm umfassend Befehle, welche beim Ausführen des Computerprogramms durch eine Engineering-Plattform, diese dazu veranlassen, ein Verfahren nach einem der Ansprüche 1 bis 9 durchzuführen.

11. Maschinenlesbarer Datenträger umfassend ein Computerprogramm nach Anspruch 10.

12. Datenstrom, welcher das Computerprogramm nach Anspruch 10 trägt.

13. Engineering-Plattform, umfassend ein Computerprogramm nach Anspruch 10.
